# EUROPEAN PATENT APPLICATION

(11) **EP 1 561 560 A1**
(43) Date of publication of application: **10.08.2005**
(21) Application number: 03756718.7
(22) Date of filing: 21.10.2003
(51) Int. Cl.: B29C 39/26, B29C 39/02, G02C 7/04, G02C 13/00

(54) **FORMING DIE FOR CONTACT LENS AND CONTACT LENS MANUFACTURING METHOD USING THE FORMING DIE**

(30) Priority: 30.10.2002 JP 2002316048
(71) Applicant: MENICON CO., LTD., Nagoya-shi, Aichi 460-0006 (JP)
(72) Inventor: YAMADA, Seiji, MENICON CO., LTD., Kakamigahara-shi, Gifu 509-0108 (JP)
(74) Representative: Nicholls, Michael John
(86) International application number: PCT/JP2003/013414
(87) International publication number: WO 2004/039555

(57) **Abstract**

A forming die for a contact lens, wherein flat mutual contact areas (62) allowed to abut on each other on the outer peripheral side of a contact lens forming cavity (15) are formed to have a width of 0.01 mm or wider under the condition that a female die (12) mates a male die (14), a generally closed auxiliary cavity (64) filled with a polymerization monomer (66) is formed on the outer peripheral side of the mutual contact areas (62), and a tubular fitted part (60) allowing both the female and male dies (12) and (14) to be fitted to each other by tubular surfaces (30) and (50) extending in the die mating direction is formed on the outer peripheral side of the auxiliary cavity (64), whereby the forming cavity can be stably formed in the closed state by mating both the male and female dies each other so that the contact lens can be accurately and stably molded while preventing defective molding such as burrs.

## Description

### TECHNICAL FIELD

The present invention relates to a contact lens forming die for manufacturing contact lenses by a molding process, and to a contact lens manufacturing method employing it. More particularly, the present invention relates to a contact lens forming die, whereby closure can be stably provided to the lens edge portion in the forming cavity, and whereby it possible to consistently obtain mating fixation force of the male and female forming dies, so as to stably carry out molding of the desired contact lens. Also, the present invention relates to a contact lens manufacturing method employing the forming die.

### BACKGROUND ART

The molding process is one type of manufacturing method that has been used to date for both hard contact lenses and soft contact lenses. The molding process as taught, for example, in Patent Citation 1 or Patent Citation 2, involves mating a female die having a concave forming face with a male die having a convex forming face to produce a contact lens forming cavity between the mated faces of the male and female dies, and injecting a predetermined polymerizable monomer as a lens forming material into the cavity that is subjected to polymerization within the die cavity, to manufacture a contact lens of a shape corresponding to that of the forming cavity. As compared to other known contact lens manufacturing methods, such as the lens cutting method (cutting/polishing method) or spin casting method (centrifugal casting method), it is possible to mass-produce the desired contact lens at lower cost. Thus, the process has been studied for possible application in production of disposable contact lenses and the like.

With the molding process, the mating faces of the male and female dies are situated at the peripheral edge portion of the lens. Thus, in order to reduce or avoid burrs and other molding defects of the molded contact lens, it is important that the peripheral portion of the forming that corresponds to the lens edge portion be able to stably maintain a closed state. Typically, after the male and female dies have been mated and a polymerizable material supplied to them, the assembly is conveyed to a polymerization processing device where it is processed by irradiation with ultraviolet, heating, or the like. Thus, in order to stably carry out the forming process after die mating, it is desirable for the male and female dies to be held securely in the mated state. Accordingly, Patent Citation 3, Patent Citation 4, and Patent Citation 5, for example, propose a die structure whereby at the peripheral edge portion of the forming cavity, an annular edge portion formed on either the male or female die is brought into abutment with the other die in the axial direction, in order to direct intensive localized action of the die closing force to the peripheral edge portion of the forming cavity and improve sealing of the forming cavity. Patent Citation 6 proposes a die structure whereby a thin annular rim projection formed on either the male or female die at the peripheral edge portion of the forming cavity is brought into abutment with the other die in the axial direction, whereby upon mating the dies, the annular rim projection undergoes deformation following the profile of the other die, improving sealing of the forming cavity.

The former forming die provided with the edge portion taught in Patent Citations 3 -5 has the drawback that since the peripheral portion of the forming cavity only comes into abutment over a miniscule zone at the distal edge of the edge portion, it is difficult to provide stable closure at the peripheral portion of the forming cavity, and that even slight relative tilting of the male and female dies can result in a gap forming between the annular edge portion and the abutting face. This results in the risk of burrs or other molding defects occurring at the peripheral edge of the contact lens molding. In the latter forming die provided with the annular rim projection taught in Patent Citation 6, since it is difficult to form such a thin annular rim projection on the forming die, there is the problem that manufacture of the forming die per se is complicated and expensive. Additionally, since the annular rim projection is thin and easily deformable, it is difficult for it to assume a consistent shape during abutment, and there is risk that due to slight relative tilting of the male and female dies, the distal edge of the annular rim projection may jut out into the interior of the forming cavity, making it difficult to achieve adequate molding stability.
(Patent Citation 1)
   JP-A-50-151966
(Patent Citation 2)
   JP-A-5 5-151618
(Patent Citation 3)
   JP-A-2-172712
(Patent Citation 4)
   JP-A-6-208090
(Patent Citation 5)
   JP-A-2000-289041
(Patent Citation 6)
   JP-A-1-500256

### DISCLOSURE OF THE INVENTION

With the foregoing in view, it is an object of the present invention to provide a contact lens forming die of novel construction whereby the forming cavity can be stably provided closure during mating, and whereby it possible to consistently obtain mating fixation force of the male and female forming dies, so as to be able to stably carry out molding of the desired contact lens; as well as a contact lens manufacturing method employing the same.

Modes of the invention for solving the aforementioned problems are described hereinbelow. Constituent elements employed in the modes set forth hereinbelow may be combined in any of various possible ways. The modes and technical features of the invention are not limited to those disclosed hereinbelow, and should be appreciated on the basis of the inventive concept disclosed in the description as a whole and the accompanying drawings, or that would be apparent to the practitioner of the art from these disclosures.

### (First Mode of the Invention)

The invention in a first mode thereof is a contact lens forming die comprising a female die having a concave forming face and a male die having a convex forming face, which are mated with each other to create a forming cavity between the opposed concave forming face and convex forming face, the forming cavity adapted to be filled with polymerizable monomer which is polymerized to form a contact lens, characterized in that by means of mating the female die and the male die with each other, annular flat mutual contact areas extending over a width of 0.01 mm or greater in a direction orthogonal to a die mating direction are formed by abutting the female and male dies at an outer peripheral side of the concave forming face and the convex forming face; and at an outer peripheral side of the mutual contact areas an auxiliary cavity of substantially closed structure to be filled with the polymerizable monomer during molding is formed by the female and male dies positioned spaced apart in opposition to each other in the die mating direction; while a tubular fitted part is formed by fitting together of the female and male dies at an outer peripheral side of the auxiliary cavity by means of tubular surfaces extending in the die mating direction.

In the contact lens forming die of construction according to this mode, the forming cavity situated on the inner peripheral side and the auxiliary cavity situated on the outer peripheral side are formed to either side of the mutual contact areas of the male and female dies mating the peripheral edge of the forming cavity with the dies in the mated state. The forming cavity and the auxiliary cavity are then filled with polymerizable monomer, and the polymerizable monomer within the two cavities is subjected to a polymerization process, whereby force exerted on the male and female dies due to polymerization shrinkage of the polymerizable monomer filling the cavities is exerted on the male and female molds in the die mating direction, in the forming cavity portion situated to the inner peripheral side of the mutual contact areas and the auxiliary cavity portion situated to the peripheral of the mutual contact areas, respectively.

Thus, by means of force created by polymerization shrinkage of the polymerizable monomer exerted respectively on the forming cavity and the auxiliary cavity, acting force in the die mating direction is exerted to both the inner peripheral side and the outer peripheral side of the mutual contact areas. Thus, the resultant force of the acting force on the inner peripheral side and outer peripheral side of the mutual contact areas is attracted as a pushing force on the mutual contact areas in the direction of abutment of the male and female dies in the mating direction. In conjunction with the annular extending flat shape of predetermined width dimension of 0.01 mm or greater of these mutual contact areas, the male and female dies may be brought into stable abutment at the mutual contact areas thereof in the die mating direction, whereby the desired forming cavity may be formed with a highly closed state and good shape stability of the peripheral edge portion.

Additionally, in the contact lens forming die of construction according to this mode, since male and female dies are positioned relatively in the direction orthogonal to the die mating direction by means of the tubular fitted portion, during mating, the male and female dies can be positioned easily and highly accurately in the direction orthogonal to the die mating direction. Thus, at the mutual contact areas as well, the male and female dies can be positioned highly accurately in the direction orthogonal to the die mating direction, so that shape stability of the peripheral edge portion of the forming cavity during die mating can be improved further.

### (Second Mode of the Invention)

The invention in a second mode thereof is a contact lens forming die according to the first mode wherein a capacity of the auxiliary cavity is 1 -40% of a capacity of the forming cavity. In this mode, force exerted on the male and female dies in the die mating direction based on polymerization shrinkage of the polymerizable monomer filling the auxiliary cavity can be exerted more effectively, and abutment of the male and female dies at the mutual contact areas can be made more secure and stable. However, if the auxiliary cavity is less than 1%, it becomes difficult to achieve an adequate level of force exerted on the male and female dies in the die mating direction based on polymerization shrinkage of the polymerizable monomer filling the auxiliary cavity, whereas if the auxiliary cavity exceeds 250%, it is possible that waste of polymerizable monomer filling the auxiliary cavity will become a problem.

### (Third Mode of the Invention)

The invention in a third mode thereof is a contact lens forming die according to the first or second mode wherein by means of mating the female die and the male die with each other, the male and female dies are positioned spaced apart from each other by an outer peripheral side of the tubular fitted portion, forming an annular monomer reservoir that contains an excess polymerizable monomer during molding. In this mode, injection of polymerizable material into the auxiliary cavity during die mating may be carried out stably, while preventing overflow of the polymerizable monomer to the die exterior.

### (Fourth Mode of the Invention)

The invention in a fourth mode thereof is a contact lens forming die according to any one of the first to third modes, wherein in the female die, a face forming the auxiliary cavity is a smooth surface devoid of bumps in an entirety thereof. In this mode, when the male die is aligned with the female die and the forming cavity and auxiliary cavity are filled with polymerizable monomer, air expelled from the forming cavity and expelled from the auxiliary cavity flows smoothly, preventing air from remaining in the forming cavity or auxiliary cavity. Thus, it is possible to avoid a situation where air remaining in the auxiliary cavity causes a drop in force in the die mating direction exerted on the male and female dies utilizing polymerization shrinkage, and to achieve more stable force in the die mating direction utilizing polymerization shrinkage.

### (Fifth Mode of the Invention)

The invention in a fifth mode thereof is a contact lens forming die according to any one of the first to fourth modes, wherein the female die is formed with an annular flat surface extending in a direction generally orthogonal to the die mating direction towards an outer peripheral side from an peripheral edge portion of the concave forming face, the annular flat surface of the female die being brought into abutment at an inner peripheral portion thereof with the male die so as to form the mutual contact areas, and being positioned at an outer peripheral portion thereof in opposition to the male die spaced apart therefrom in the die mating direction so as to form the auxiliary cavity. In this mode, zones for formation of the mutual contact areas and the auxiliary cavity in the female die can be formed easily and with high accuracy.

### (Sixth Mode of the Invention)

The invention in a fifth mode thereof is a contact lens forming die according to the fifth mode, wherein the male die is formed with an annular flat surface extending in a direction generally orthogonal to the die mating direction towards an outer peripheral side from an peripheral edge portion of the convex forming face, the annular flat surface of the male diem being brought into abutment with the annular flat surface of the female die so as to form the mutual contact areas, and a sloping face that extends towards the outer peripheral side from an peripheral edge portion of the annular flat surface of the male die and that moving towards the outer peripheral side becomes gradually further apart in the die mating direction from the annular flat surface of the female die, the sloping face being positioned in opposition to the annular flat surface of the female die so as to form the auxiliary cavity, and having a tapered face that slopes at a predetermined angle in the die mating direction and extends linearly towards the outer peripheral side, or a bowed convex face that projects out to the auxiliary cavity side and extends towards the outer peripheral side. In this mode, a forming mold for manufacturing the male die can be easily provided by means of a cutting process with the mutual contact area and auxiliary cavity formation zones, making it possible to form formation zones for the mutual contact areas and auxiliary cavity on the male die easily and with a high degree of accuracy.

In this mode, during formation of the sloping face of the male die with the aforementioned bowed convex face, preferably, there will be employed a structure wherein the inner edge side of the bowed convex face and the peripheral edge side of the annular flat surface interconnect smoothly by a common tangent. By employing this specific bowed convex shape for the axial, sectional shape of the sloping face of the male die, there is afforded smooth flow of polymerizable monomer that when the male and female dies are mated fills the forming cavity as well as being squeezed out therefrom to fill the auxiliary cavity, effectively preventing air from remaining in the auxiliary cavity. In the initial stage of polymerization, there is reduced or eliminated negative pressure associated with polymerization shrinkage of the polymerizable monomer in the forming cavity through smooth supply from the auxiliary cavity of polymerizable monomer that has not yet polymerized in the auxiliary cavity, effectively avoiding the molding problems such as residual stress or surface sink in the target contact lens. Additionally, since the inner edge side of the forming face of the auxiliary cavity in the male mold is formed so as to extend out smoothly from the annular flat portion without any inflection point, a closed state of the forming cavity may be stably achieved by means of mating of the male and female dies at the annular flat portions. This makes it possible to more consistently achieve the desired edge shape in the contact lens. Also, since a shape that smoothly interconnects the annular flat portion and the auxiliary cavity forming face can be readily imparted by a single continuous forming face by means of a single inold member in the mold used to form the male die, the occurrence of burrs or the like at the interface of the annular flat portion and the auxiliary cavity forming face can be readily prevented, so that a closed state of the forming cavity with mating of the male and female dies at the annular flat portions can be more stably achieved.

### (Seventh Mode of the Invention)

The invention in a seventh mode thereof is a contact lens forming die according to any one of the first to sixth modes, wherein the tubular surface making up the tubular fitting portion in the female die is formed projecting from a peripheral edge side of an auxiliary cavity forming face in the die mating direction of the female die with the male die. In this mode, with the concave forming face of the female die supported open upward in the vertical direction, the male die can be mated onto the female die from above, whereby for example, by injecting a predetermined quantity of polymerizable monomer onto the concave forming face of the female die prior to mating, it is possible to efficiently and stably fill the forming cavity with polymerizable monomer by means of mating the male and female dies.

### (Eighth Mode of the Invention)

The invention in an eighth mode thereof is a contact lens forming die pertaining to any of the first to seventh modes wherein a gap for expelling excess polymerizable monomer in the auxiliary cavity to an outside during mating of the male and female dies is formed in the tubular fitting portion. In this mode, even in the event that the male and female dies are not mated at high pressure, it is nevertheless possible to reduce or avoid a rise in filling pressure of the polymerizable monomer in the forming cavity, making it possible to form the lens with greater precision, as well as avoiding an initial high pressure state in the auxiliary cavity so that it is possible to more effectively achieve the desired mating assist force on the male and female dies brought about in association with polymerization shrinkage of the polymerizable monomer.

### (Ninth Mode of the Invention)

The invention in a ninth mode thereof relates to a method for manufacturing a contact lens using the contact lens forming die according to any one of the first to eighth modes, characterized in that with the forming cavity and the auxiliary cavity formed between the mating faces of the female die and the male die being filled with the polymerizable mononier, the polymerizable monomer filling the forming cavity and the auxiliary cavity is subjected to a polymerization process. According to the manufacturing method of this mode, force in the mating direction exerted on the male and female dies on the basis of polymerization shrinkage of the polymerizable monomer filling the forming cavity, and force exerted on the male and female dies on the basis of polymerization shrinkage of the polymerizable monomer filling the auxiliary cavity, are exerted at generally the same time on the inner peripheral side and outer peripheral side to either side of the mutual contact areas. Therefore, the action of an unbalanced load on the mutual contact areas is prevented, and the male and female dies are stably and securely abutted at the mutual contact areas, thereby effectively preventing the occurrence of burrs or other defects in the lens edge portion of the contact lens, so that the desired contact lens can be molded consistently with high accuracy.

### (Tenth Mode of the Invention)

The invention in a tenth mode thereof is a method for manufacturing a contact lens according to the ninth mode, wherein the mating direction of the male and female dies is generally vertical, with the male die being mated relative to the female die from above in the vertical direction. In this mode, prior to mating, by injecting a predetermined quantity of polymerizable monomer onto the concave forming face of the female die, it is possible to efficiently and stably fill the forming cavity with polymerizable monomer by means of mating the male and female dies.

### (Eleventh Mode of the Invention)

The invention in an eleventh mode thereof is a method for manufacturing a contact lens according to the eighth or tenth mode, wherein at least one die selected from the male die and the female die is a forming die of synthetic resin, and with the male and/or female die of synthetic resin in a softened state at high temperature; the polymerizable monomer, is supplied between the opposed face of the male and female dies, while mating the male and female dies so that the forming cavity and the auxiliary cavity are filled with the polymerizable monomer. In this mode, when mating the male and female dies so that they abut at the mutual contact areas, the abutting faces of the male and female dies undergo deformation so as to conform to each other, whereby the abutting state at the mutual contact areas can be more advantageously and stably realized. Thus, mold dimension error in the forming mold and the like can be compensated for or eliminated, making it possible to more consistently carry out molding of the desired contact lens. As will be apparent from this, in this mode, at the time of mating of the male and female dies, at least one die selected from the male die and the female die will be brought to softened state at high temperature, at least at the portions thereof forming the mutual contact areas.

### (Twelfth Mode of the Invention)

The invention in an twelfth mode thereof is a method for manufacturing a contact lens according to the eleventh mode, wherein at least one die selected from the male die and the female die is a forming die of synthetic resin, with the male and/or female die of synthetic resin being mated used in a high temperature state prior to completely cooling after molding thereof. In this mode, since no special heating moans is needed to bring the forming die into a softened state at high temperature, and since the problem of deformation or strain due to reheated after cooling the forming die can be avoided, dimensional accuracy of the desired contact lens can be improved as well.

### (Effects of the Invention)

As will be apparent from the preceding description, in the contact lens forming die of construction according to the present invention, during mating, the male and female dies are positioned with high accuracy on a center axis by tubular fitter portions, and are stably closed at wide mutual contact areas formed to the outer peripheral side of the forming cavity. Additionally, by putting to good use polymerization shrinkage of the polymerizable monomer exerted on the forming cavity formed on the inner peripheral side of the mutual contact areas and on the auxiliary cavity formed on the outer peripheral side, abutting force of the male and female dies in the mutual contact areas can be effectively and stably achieved. Thus, at the mating faces of the male and female dies, it is possible to form the forming cavity with high accuracy and stability, and thus contact lenses of the desired shape can be molded with high accuracy and stability.

### BRIEF DESCRIPTION OF THE DRAWINGS

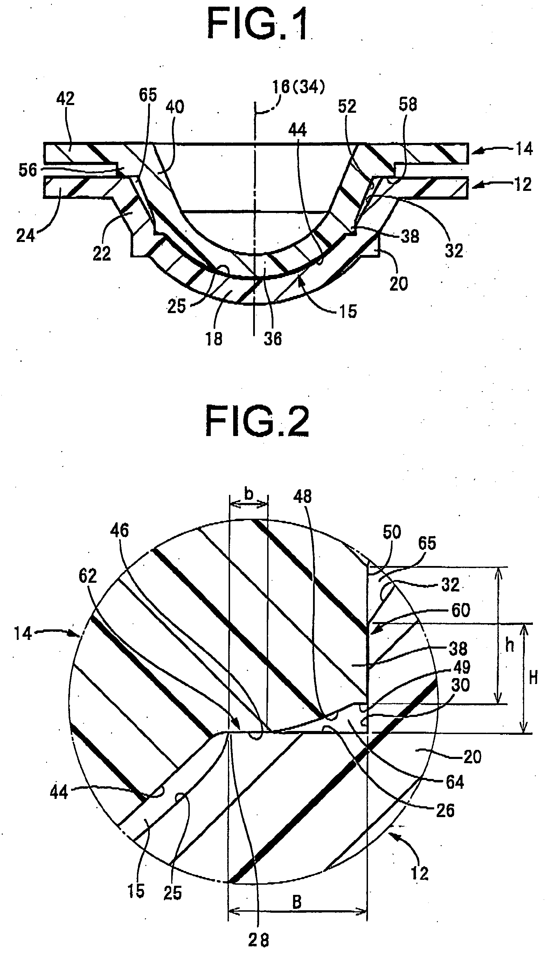

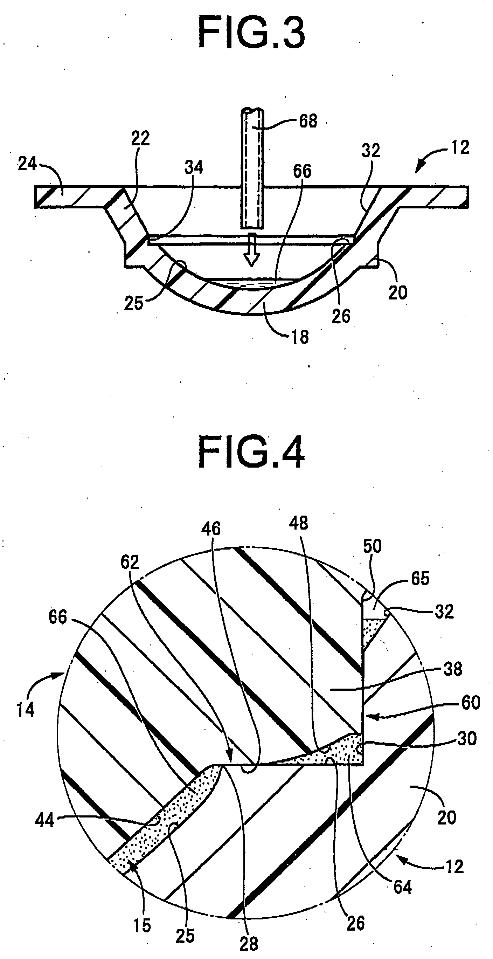

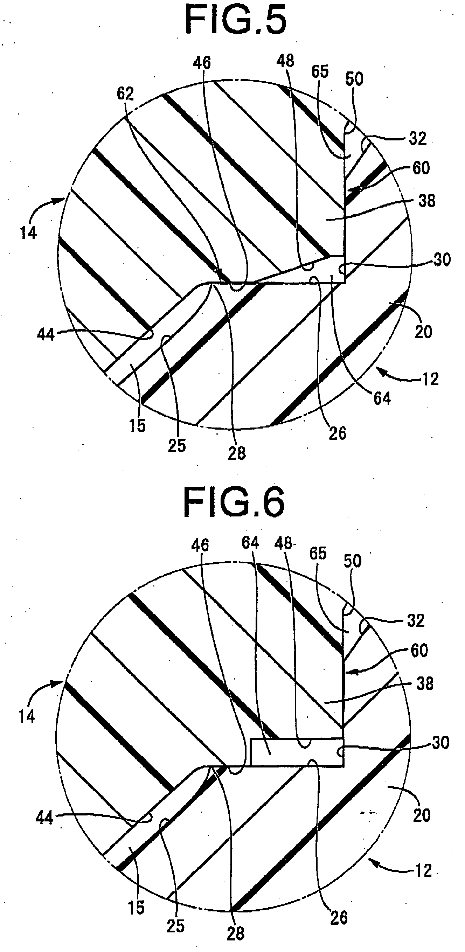

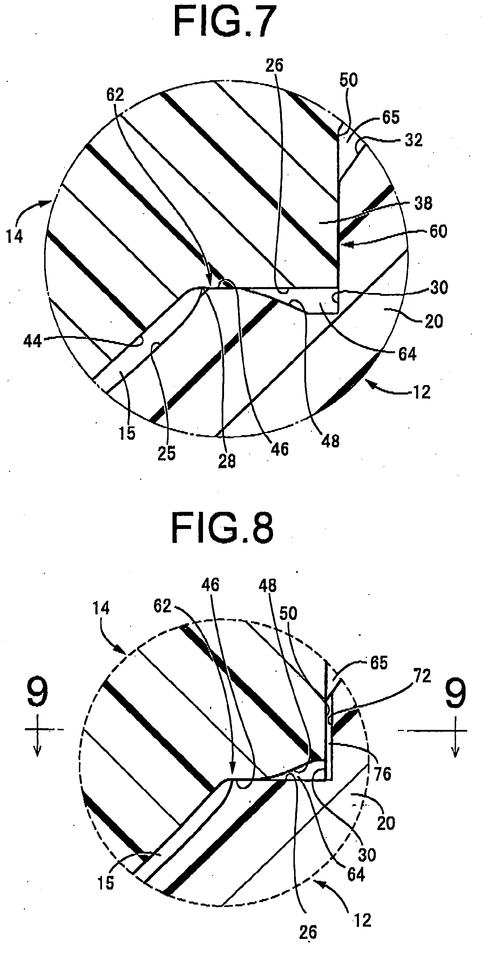

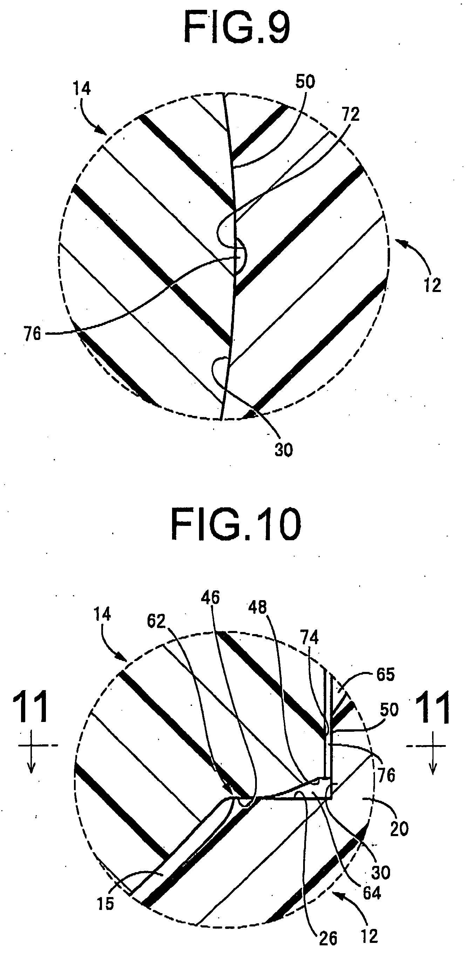

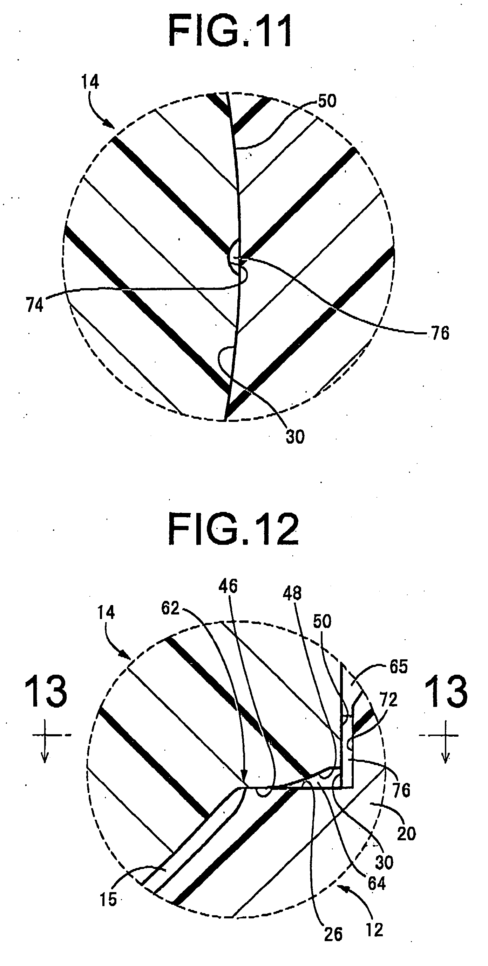

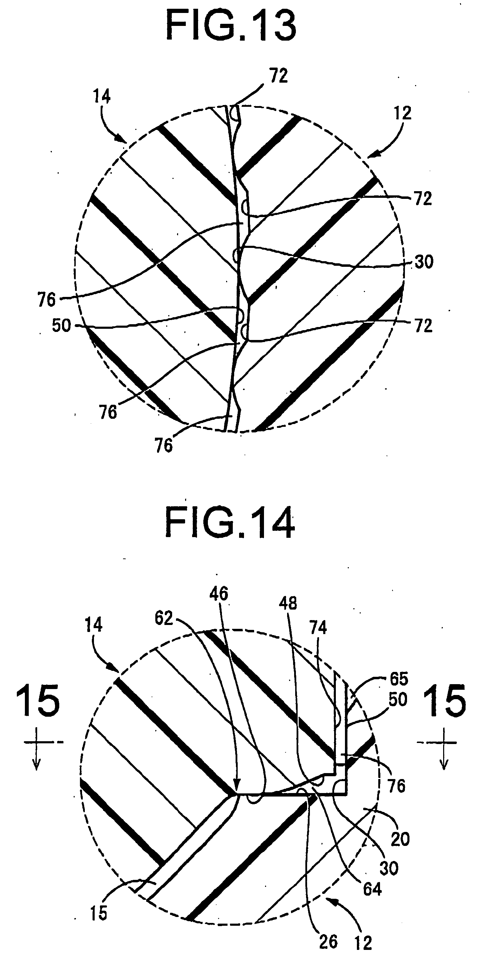

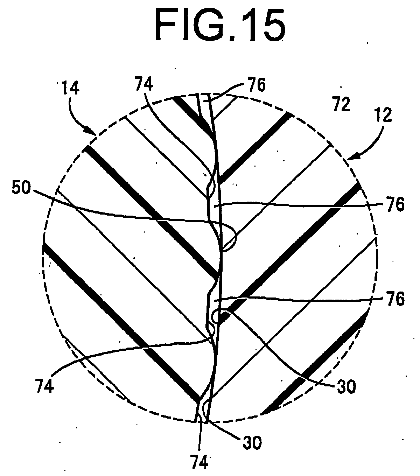

FIG. 1 is a longitudinal sectional view of the contact lens forming die as an embodiment of the invention, shown in the mated state. FIG. 2 is a longitudinal sectional view showing an enlargement of a relevant part of the contact lens forming die of FIG. 1. FIG. 3 is an illustration of a manufacturing process for a contact lens according to the method of the invention, using the forming die shown in FIG -1. FIG. 4 is an illustration of another manufacturing process for a contact lens according to the method of the invention, using the forming die shown in FIG. 1. FIG 5 is a longitudinal sectional view corresponding to FIG 2, showing an enlargement of a relevant part of the contact lens forming die as another embodiment of the invention. FIG. 6 is a longitudinal sectional view corresponding to FIG. 2, showing an enlargement of a relevant part of the contact lens forming die as yet another embodiment of the invention. FIG. 7 is a longitudinal sectional view corresponding to FIG. 2, showing an enlargement of a relevant part of the contact lens forming die as yet another embodiment of the invention. FIG. 8 is a longitudinal sectional view corresponding to FIG. 2, showing an enlargement of a relevant part of the contact lens forming die as still another embodiment of the invention. FIG. 9 is a sectional view taken along 9-9 in FIG. 8. FIG. 10 is a longitudinal sectional view corresponding to FIG 2, showing an enlargement of a relevant part of the contact lens forming die as still another embodiment of the invention. FIG 11 is a sectional view taken along 11-11 in FIG. 10. FIG. 12 is a longitudinal sectional view corresponding to FIG 2, showing an enlargement of a relevant part of the contact lens forming die as still another embodiment of the invention. FIG. 13 is a sectional view taken along 13-13 in FIG. 12. FIG. 14 is a longitudinal sectional view corresponding to FIG. 2, showing an enlargement of a relevant part of the contact lens forming die as yet another embodiment of the invention. FIG. 15 is a sectional view taken along 15-15 in FIG 14.

### BEST MODE FOR CARRYING OUT THE INVENTION

A more specific understanding of the invention will be provided through the following detailed description of the embodiments with reference to the accompanying drawings.

A contact lens forming die 10 as a first embodiment of the invention is shown in FIG 1. The forming die 10 is composed of a female die 12 and a male die 14; with the female and male dies 12, 14 mated with each other as shown in the drawing, a contact lens forming cavity 15 is formed between the mating faces of the female and male dies 12, 14.

More specifically, the female die 12 and the male die 14 are formed with shapes, dimensions and materials having rigidity sufficient to maintain constant shape of the forming cavity 15 during molding. In this embodiment in particular, the female and male dies 12, 14 are each formed of thermoplastic resin material. For instance, synthetic resins such as polypropylene (PP), polyethylene (PE), polyethylene terephthalate (PET), polystyrene (PS), polycarbonate (PC), polyvinyl chloride (PVA), nylon (PA), polyacetal (POM) and fluororesins are suitable as forming materials. Between the female die 12 and the male die 14, the same material may be employed for both dies 12, 14, or different materials may be employed. Besides synthetic resins, other forming materials for the female die 12 and the male die 14 include thermosetting resins, glass, metal, and various other materials, selected according to the required molding accuracy and molding conditions employed,

The female die 12, which is formed as a synthetic resin molded product as stated above, has an overall concave shape that opens upward, and generally has the shape of a body of rotation about the die center axis 16. More specifically, the center portion of the female die 12 is constituted as a spherical shell 18 that projects downward, with a tapered tubular portion 22 that extends upward integrally formed on the outer peripheral side of the spherical shell 18 via a shoulder portion 20, and with a flange portion 24 that spreads outwardly in the axis-perpendicular direction integrally formed on the upper rim of the tapered tubular portion 22.

On the spherical shell 18, there is formed a concave forming face 25 that corresponds to the front curve of the target contact lens, this face being constituted by the surface on the concave side, which is the face opening upward and facing in one axial direction (upward in FIG. 1). The shoulder portion 20 extends in the circumferential direction with a generally "L" shaped cross section that projects slightly outward in the axis-perpendicular direction of the outer peripheral edge of the spherical shell 18 and then projects deflecting axially upward. As shown in FIG. 2, by means of the shoulder portion 20, there is formed an annular flat portion 26 that spreads outward in the axis-perpendicular direction from the outer peripheral edge of the concave forming face 25. This annular flat portion 26 connects with the outer peripheral edge of the concave forming face 25 by means of an edge portion 28, and constitutes a flat face of annular shape extending continuously around the entire circumference in the circumferential direction, spreading outwardly in the axis-perpendicular direction by a constant width dimension: B. On the shoulder portion 20 is formed a vertical tubular inner peripheral surface 30 that rises at an approximate right angle from the outer peripheral edge of the annular flat portion 26 and projecting upwardly in the axial direction by a predetermined height dimension: H.

The tapered tubular portion 22 is formed with a tapered shape that gradually increases in diameter going axially upward from the axial upper end of the shoulder portion 20. By means of the inner peripheral face of this tapered tubular portion 22, there is formed a tapered inner peripheral face 32 of funnel shape that gradually increases in diameter and opens out going axially upward from the upper edge of the tubular inner peripheral surface 30 of the shoulder portion 20. The flange portion 24 integrally formed at the upper opening of the tapered tubular portion 22 is of annular plate shape having front and back surfaces that extend in the axis-perpendicular direction, with a reinforcing rib 33 that projects axially downward being formed at the outer peripheral edge.

Meanwhile, the male die 14 that, like the female die 12, is a molded component of synthetic rosin, has an overall convex shape that projects downward, and generally has the shape of a body of rotation about the die center axis 34. More specifically, the center portion of the male die 14 is constituted as a spherical shell 36 that projects downward, with a tapered tubular portion 40 that extends upward integrally formed on the outer peripheral side of the spherical shell 36 via a shoulder portion 38, and with a flange portion 42 that spreads outwardly in the axis-perpendicular direction integrally formed on the upper rim of the tapered tubular portion 40.

On the spherical shell 36, there is formed a convex forming face 44 that corresponds to the base curve of the target contact lens, this face being constituted by the surface on the convex side, which is the face projecting downward and facing in one axial direction (downward in FIG. 1). The shoulder portion 38 extends in the circumferential direction with a generally "L" shaped cross section that projects slightly outward in the axis-perpendicular direction of the outer peripheral edge of the spherical shell 36 and then projects deflecting axially upward. As shown in FIG. 2, by means of the shoulder portion 38 there is formed a flat contact face 46 as an annular flat face that extends outwardly, in the axis-perpendicular direction from the outer peripheral edge of the convex forming face 44. This flat, contact face 46 connects smoothly to the outer peripheral edge of the convex forming face 44 so as to form the lens edge, and is a flat face of annular shape extending continuously around the entire circumference in the circumferential direction, spreading outwardly in the axis-perpendicular direction by a constant width dimension: b (where b ≤ B). To the outer peripheral side of the flat contact face 46 is formed a sloped opposing face 48 that slopes upward in the axial direction and spreads out to the outer peripheral side.

In this embodiment in particular, the sloped opposing face 48 is formed extending continuously around the entire circumference with a cross section that is bowed in an arcuate configuration that is downwardly convex in the axial direction. By so doing, in the forming mold for forming the male die 14, the surface for forming the sloped opposing face 48 can be machined easily and with high precision by means of a cutting process using a turning tool. At the outer peripheral edge of the sloped opposing face 48 is an annular flat surface 49 having a gentle slope angle over a predetermined width in the diametrical direction and extending in the generally axis-perpendicular direction.

To the outer peripheral side of the sloped opposing face 48 in the shoulder portion 38 there is formed a vertical tubular outer peripheral surface 50 that rises at an approximate right angle from the outer peripheral edge of the sloped opposing face 48 and projecting upwardly in the axial direction by a predetermined height dimension: h. The size of the height dimension: h of the tubular outer peripheral surface 50 is such that the sum (h + e) of h plus the rise dimension: e of the sloped opposing face 48 in the mating direction from the flat contact face 46 is greater than the height dimension: H of the tubular inner peripheral surface 30 of the female die 12.

The tapered tubular portion 40 is formed with a tapered shape that gradually increases in diameter going axially upward from the axial upper end of the shoulder portion 38. The outer peripheral face of the tapered tubular portion 40 constitutes a tapered outer peripheral face 52 that gradually increases in diameter and opens out axially upward from the upper edge of the tubular outer peripheral surface 36 of the shoulder portion 38. A flange portion 42 integrally formed at the upper opening of the tapered tubular portion 40 is of annular plate shape having front and back surfaces that extend in the axis-perpendicular direction, with a reinforcing rib 54 that projects axially upward being formed at the outer peripheral edge.

In the female die 12 and male die 14 of the construction described above, the annular flat portion 26 of the female die 12 and the flat contact face 46 of the male die 14 have substantially identical inside diameter dimension, whereas the outside diameter dimension of the annular flat portion 26 of the female die 12 is substantially identical or slightly smaller than the outside diameter dimension of the sloped opposing face 48 of the male die 14. The tubular outer peripheral surface 50 of the male die 14 has greater axial length than the tubular inner peripheral surface 30 of the female die 12, and the tapered outer peripheral face 52 of the male die 14 has a greater slope angle than the tapered inner peripheral face 32 of the female die 12. At the inner peripheral edge of the flange portion 42 a contact projection 56 that projects downward is integrally formed in annular configuration continuously in the circumferential direction, the bottom face of this contact projection 56 constituting a flat stopper face 58 that extends out in the axis-perpendicular direction.

By so doing, by means of mating the female and male dies 12, 14 so that they are aligned in the axial direction on the die center axis 16, the tubular outer peripheral surface 50 of the shoulder portion 38 of the male die 14 is inserted and fitted in the axial direction against the tubular inner peripheral surface 30 of the shoulder portion 20 of the female die 12, until finally the flat contact face 46 of the shoulder portion 38 of the male die 14 abuts the annular flat portion 26 of the shoulder portion 20 of the female die 12, mutually positioning the two. That is, during mating, the female and male dies 12, 14 are mutually positioned in the axis-perpendicular direction by means of a tubular fitted portion 60 composed of the tubular inner peripheral surface 30 and the tubular outer peripheral surface 50, as well as being positioned in the axial direction through abutment of the flat contact face 46 against the annular flat portion 26, so as to be able to ensure proper shape on the part of the forming cavity 15. Even in the event that the annular flat portion 26 or flat contact face 46 is deformed, since the stopper face 58 of the contact projection 56 formed on the flange portion 42 of the male die 14 is placed in abutment with this flange portion 24 of the female die 12, unnecessary proximity or relative tilt of the two female and male dies 12, 14 is avoided and proper shape of the forming cavity 15 is assured. As will be apparent from the preceding description, even with the female and male dies 12, 14 mated with the annular flat portion 26 and flat contact face 46 abutting each other, the stopper face 58 of the contact projection 56 in the male die 14 is positioned in opposition, spaced slightly apart from the flange portion 24 of the female die 12.

With the female and male dies 12, 14 mated in this state, in the superimposed regions of the shoulder portions 20, 38, the flat contact face 46 of the male die 14 is in intimate contact with the annular flat portion 26 of the female die 12, over an area of predetermined planar dimensions extending in annular configuration continuously in the circumferential direction by a predetermined width: b in the axis-perpendicular direction. Coupled with the female and male dies 12, 14 being held coaxially by the tubular fitted portion 60 in the manner described above, intimate contact between the annular flat portion 26 of the female die 12 and the flat contact face 46 of the male die 14 can be achieved stably and with high accuracy, whereby the forming cavity 15 can be formed with a stable shape and sealed at the outer peripheral edge. As will be apparent from this, in this embodiment, the mutual contact areas 62 are formed by means of the annular flat portion 26 of the female die 12 and the flat contact face 46 of the male die 14 which are brought into abutment with each other during mating.

With the female and male dies 12, 14 in the mated state, the sloped opposing face 48 of the male die 14 is positioned in opposition to the annular flat portion 26 of the female die 12, spaced apart therefrom by a predetermined distance in the axial (mating) direction. By so doing, the annular auxiliary cavity 64 that extends continuously in the circumferential direction is formed between the opposing faces of the sloped opposing face 48 of the male die 14 and the annular flat portion 26 of the female die 12. This auxiliary cavity 64 at the inside peripheral portion thereof is sealed off by the mutual contact areas 62 of the female and male dies 12, 14, and at the outside peripheral portion is substantially sealed off by the tubular fitted portion 60 of the female and male dies 12, 14, so that the polymerizable monomer cannot readily leak out. That is, the forming cavity 15 is formed to the inner peripheral side, and the auxiliary cavity 64 to the outer peripheral side, with the mutual contact areas 62 of the female and male dies 12, 14 situated therebetween, so that each is formed with a substantially sealed structure.

In the female and male dies 12, 14 mated in the manner described above, at a location further to the outer peripheral side of the tubular fitted portion 60, the tapered inner peripheral face 32 of the female die 12 and the tapered outer peripheral face 52 of the male die 14 are positioned in opposition spaced apart from each other, whereby an annular monomer reservoir 65 that extends continuously in the circumferential direction is formed with a hollow structure. This monomer reservoir 65 may communicate with the outer space through the superimposed faces of the flange portions 24, 42 of the female and male dies 12, 14.

When molding (polymerizing) the target contact lens using the contact lens forming die 10 composed of the female die 12 and male die 14 described above, first, as shown in FIG. 3, the female die 12, which has been produced by injection molding or the like, is supported on an appropriate jig so as to open upward in the vertical direction. In the saucer-shaped area formed by the concave forming face 20 of the spherical shell 18, a polymerizable monomer 66 suitable for producing the target ophthalmic lens is supplied by injection through an injection tube 68. The amount of polymerizable monomer 66 supplied to the female die 12 is established so as to fill not only the forming cavity 15 formed between the mating faces of the female die 12 and the male die 14, but also the auxiliary cavity 64.

As the polymerizable monomer 66 it is possible to employ appropriately any of the various kinds of liquid monomer compositions known in the art for use as starting materials for soft contact lenses and hard contact lenses; for example, besides any one or more of the radical polymerizable compounds commonly employed to date, materials could be composed of macromers or prepolymers as well. Such compounds may take the form of liquid monomer compositions that optionally include appropriate crosslinking agents, polymerization initiators (e.g. thermal polymerization initiators, photopolymerization initiators etc.), sensitizers, or other additives.

Then, as shown in FIG. 1 and FIG. 4, the male die 14 is superimposed against the female die 12 from above in the vertical direction, with the die center axes 16, 16 aligned. This superimposition of the female and male dies 12, 14 is accomplished with the outer peripheral face of the shoulder portion 38 of the male die 14 guided in the axial direction by the tapered inner peripheral face 32 of the female die 12, while fitting the tubular outer peripheral surface 50 of the male die 14 into the tubular inner peripheral surface 30 of the female die 12 and exerting mold closing load (mating force) of predetermined magnitude across the female die 12 and the male die 14 in the direction of the die center axis 16, to superimpose the convex forming face 44 of the male die 14 against the concave forming face 22 of the female die 12.

Here, in preferred practice, mating will be carried out with one or both of the female and male dies 12, 14 placed in a high temperature state above normal temperature, so that the female die 12 and/or male die 14 is in a softened state. In this embodiment in particular, the male die 14 is injection molded later than the female die 12, and during injection molding, the male die 14 is mated with the female die 12 after the male die 14 has been released from the mold for forming it (not shown), but before the forming resin material cools down completely to room temperature from the high temperature state. The female die 12 may also be used before it has completely cooled down to room temperature.

By using the male die 14 in a high temperature state when mating it with the female die 12, the male die 14, which is fabricated of thermoplastic resin material, may be reduced in hardness and made readily deformable for mating of the male die 14 and the female die 12. Thus, during mating and subsequent clamping, the female and male dies 12, 14 can be secured fitting securely and in a substantially sealed state by means of the tubular fitting portion 60. It is also possible to make the female and male dies 12, 14 conform in shape to each other at the mutual contact areas 62 so as to stably produce a highly sealed state.

As shown in FIG. 4, by means of mating the female and male dies 12, 14, the sealed forming cavity 15 and auxiliary cavity 64 filled with the polymerizable monomer 66 are formed. Excess polymerizable monomer 66 remaining after the forming cavity 15 and auxiliary cavity 64 are filled pools in the monomer reservoir 65, so as to avoid spilling out from the forming die 10. Next, with the female die 12 and the male die 14 held in the mated state, polymerization of the polymerizable monomer 66 is carried out. During the polymerization process, it is acceptable to exert a predetermined level of mating force across the female and male dies 12, 14.

While thermal polymerization or the like would be possible through the addition of a thermal polymerization initiator to the polymerizable monomer 66, in this embodiment, in order to avoid the effects of heat on the female and male dies 12, 14 and on the polymerizable monomer 66, it is preferable to employ photopolymerization through irradiation with ultraviolet, using a photopolymerization initiator. Where a monomer photopolymerizable with ultraviolet radiation or the like is employed, the female and male dies 12, 14 will be formed of light-transmissive material.

During mating in the manner described above, by spreading out the polymerizable monomer 66 dispensed onto the concave forming face 20 of the female die 12 as depicted in FIG. 3, by pushing the convex forming face 44 of the male die 14 against it from above, the monomer may be induced to fill up the forming cavity 15; and by pushing and spreading it further, may be led from the outer peripheral portion of the forming cavity 15 into the auxiliary cavity 64 and then made to fill the auxiliary cavity 64, becoming pushed out from the outer peripheral portion of the auxiliary cavity 64 into the monomer reservoir 65. The surface of the male die 14 which pushes and spreads out the polymerizable monomer 66 from above is made up not only of the convex forming face 44 that forms the forming cavity 15, but also of the smooth, bump-free surface including the flat contact face 46 formed continuously with the outer periphery thereof, and the sloped opposing face 48 in turn formed continuously with the outer periphery thereof. As shown in FIG. 1 and FIG. 2, there are no inflection points along the entire length in the diametrical direction, the surface of each area is connected smoothly by a common tangent. Additionally, in this embodiment, the convex forming face 44, the flat contact face 46, and the sloped opposing face 48 of the male die 14, are formed such that any point on their surfaces is situated uppermost in the axial direction (parting direction) when looking towards the inner peripheral side, and situated lowermost in the axial direction (mating direction) when looking towards the outer peripheral side.

By means of pushing and spreading out the polymerizable monomer 66 with the bottom face of the male die 14 which is smooth overall and which projects gradually downward towards the center from the outer peripheral side, the polymerizable monomer 66 may be pushed and spread out smoothly, effectively avoiding residual air, as well as rapidly and stably filling the forming cavity 15 and the auxiliary cavity 64 with the polymerizable monomer 66.

On the male die 14, the surface extending from the convex forming face that forms the forming cavity 15, through the flat contact face 46 and up onto the sloped opposing face 48 extends smoothly in the diametrical direction overall. With the sloped opposing face 48 consisting of a bowed convex shape, and the auxiliary cavity 64 formed by the opposing faces of the sloped opposing face 48 and the annular flat portion 26 of the female die 12 is situated between smoothly towards the inner peripheral side. Thus, with the polymerizable monomer 66 in the initial stage of polymerization, and with the flat contact face 46 and the annular flat portion 26 not yet placed securely in intimate contact, negative pressure generated by polymerization shrinkage occurring as polymerization proceeds from the generally center portion of the forming cavity 15 is advantageously reduced or eliminated by the replenishing action of the polymerizable monomer which is led from the auxiliary cavity 64 along the smooth sloped opposing face 48 towards the inner peripheral side and led into the forming cavity 15 through the slight gap between the flat contact face 46 and the annular flat portion 26. By means of the negative pressure-mitigating action within the forming cavity 15 during the initial stage of polymerization molding, the molding defects such as residual stress or surface sink of the polymerization-molded contact lens can be effectively avoided.

In this way, by means of polymerization of the polymerizable monomer 66 in the forming cavity 15, there is formed a contact lens of the target shape corresponding to the shape of the forming cavity 15. After the polymerization process, the female and male dies 12, 14 are parted, and the formed contact lens is released, completing manufacture of the target ophthalmic lens.

During the process of polymerization of the polymerizable monomer 66 which fills the forming cavity 15, at generally the same time therewith, the polymerizable monomer filling the auxiliary cavity 64 is also subj ected to the polymerization process. Where the polymerizable monomer 66 is photopolymerizable, for example; this operation can be achieved readily by simultaneous ultraviolet irradiation of the polymerizable monomer 66 filling both the forming cavity 15 and the auxiliary cavity 64. In order to specify which die the contact lens will remain attached to when the female and male dies 12, 14 are parted, in preferred practice, the cavity forming face of the female die 12, male die 14 or both, i.e. the concave forming face 25 and/or the convex forming face 44, will be subjected to high frequency glow discharge, corona discharge, ultraviolet irradiation, atmospheric pressure plasma or other known process.

According to the ophthalmic lens manufacturing process described above, the female and male dies 12, 14, during mating thereof, are positioned fitted together with high accuracy on the same axis by the tubular fitted portion 60 superimposed accurately in a state of intimate contact with each other at mutual contact areas 62 of established planar dimensions or predetermined width. With this arrangement, the forming cavity 15 is defined with high accuracy, there is good cut-off of the resin material in the mating zone formed to the outer peripheral edge of the forming cavity, and the target contact lens can be manufactured with excellent dimensional accuracy and stability. That is, in the mutual contact areas 62 of the female and male dies 12, 14 at the outer peripheral edges of the forming cavity 15 where burrs or other molding defects of the contact lens tend to occur, not only is the area of planar contact of the female and male dies 12, 14 made larger, but relative tilt of the female and male dies 12, 14 is prevented by the tubular fitted portion 60 so that a stable state of intimate contact is achieved. This makes it possible to seal the outer peripheral edge of the forming cavity 15 stably with high accuracy, as well as stably obtain forming surface shape with high accuracy, so that the target contact lens can be produced with good accuracy while avoiding burrs and other defects.

In particular, in this embodiment, the female die 12 is composed of a flat annular flat face 26 that includes the mutual contact portion 62 and whose face to the outer peripheral side thereof extends in the axis-perpendicular direction overall. On the male die 14, the mutual contact portion 62 is composed of the flat contact face 46 that extends in the axis-perpendicular direction, with the outer peripheral edge of the flat contact face 46 connecting smoothly to the sloped opposing face 48 of bowed convex shape that rises up smoothly. Accordingly, when molding the female die 12 and the male die 14 by means of injection molding or the like, it is possible to readily mold the annular flat face 26, the flat contact face 46, and the sloped opposing face 48 with the forming face of a single mold member, and since no inflection points are present on the forming face, it is possible to prevent the occurrence of burrs at the contact faces of the female and male dies 12, 14 forming the mutual contact areas 62 and the surrounding area. Thus, no special procedure for removing burrs after molding the female and male dies 12, 14 is required, and when the female and male dies 12, 14 are mated, it is possible to accurately and stably achieve intimate contact in the mutual contact areas 62, in particular the inner peripheral edge thereof, so that the contact lens molded article can be molded with higher accuracy and stability without molding defects such as burrs.

If the width dimension: b of the mutual contact areas 62 of the female and male dies 12, 14 is too small it becomes difficult to ensure an adequate level of intimate contact, so in preferred practice b ≥ 0.01 mm, more preferably b ≥ 0.1 mm. If the width dimension: b of the mutual contact areas 62 is too large, problems such as difficultly in ensuring a level of mold accuracy needed to maintain high precision of flatness overall, a large forming mold, and so on may result, so in preferred practice b ≤ 2.0 mm, more preferably b ≤ 1.0 mm.

Additionally, in the contact lens forming die 10 having the construction described above, to either side of the mutual contact areas 62, the forming cavity 15 is situated to the inside in the circumferential direction and the auxiliary cavity 64 is situated to the outside in the circumferential direction, with the polymerizable monomer 66 within the generally closed cavities 15, 64 being subjected to polymerization generally at the same time, whereby tensile force created by polymerization shrinkage of the polymerizable monomer 66 is exerted on the inside faces of the two cavities 15, 64, and tensile force based on the polymerization shrinkage can be efficiently directed onto the mutual contact areas 62 of the female and male dies 12, 14, in a direction pushing the flat contact face 46 of the male die 14 towards the flat face 26 of the female die 12 in the mating direction.

In particular, acting force in the mating direction exerted on the female and male dies 12, 14 by means of polymerization shrinkage of the polymerizable monomer 66 acts not only on the inner peripheral side of the mutual contact areas 62 but also on the outer peripheral side, whereby the occurrence of moment exerted on the mutual contact areas 62 in a twisting or bending direction can be suppressed, with acting force in the mating direction exerted on the female and male dies 12, 14 by means of polymerization shrinkage of the polymerizable monomer 66 being made to act efficiently as abutting force in the mating direction in the mutual contact areas 62, whereby it is possible to bring the mutual contact areas 62 into intimate contact stably with high accuracy to define the target forming cavity 15, and thus to manufacture the target contact lens stably with high accuracy.

In order to exert force based on polymerization shrinkage of the polymerizable monomer 66 in the forming cavity 15 and acting force based on polymerization shrinkage of the polymerizable monomer 66 in the auxiliary cavity 64 to be advantageously exerted as abutting force in the mating direction on the mutual contact areas 62, in preferred practice, the capacity of the auxiliary cavity 64 will be 1% or more of the capacity of the forming cavity 15, and more preferably 10% or more. Since force exerted in the mating across the female and male dies 12, 14 based on polymerization shrinkage of the polymerizable monomer 66 varies depending on the projected area of the forming cavity 15 and the auxiliary cavity 64 in the mating direction, the projected area of the auxiliary cavity 64 projected in the mating direction onto a plane orthogonal to the die center axis 16 will preferably be 5% or more of the projected area of the forming cavity 15 similarly projected in the mating direction, more preferably 10% or more. However, if the auxiliary cavity 64 is too large, there will be unnecessary consumption of polymerizable monomer 66 during molding of the contact lens, so in preferred practice the capacity of the auxiliary cavity 64 will not exceed 250% of the capacity of the forming cavity 15.

In this embodiment in particular, when mating the female and male dies 12, 14, by placing at least one of the dies in a high temperature , softened state, it is possible to more advantageously stably achieve intimate contact in the mutual contact areas 62, and thus to carry out manufacture of the target contact lens stably with a higher level of accuracy. In order to ensure a higher level of dimensional and shape stability of the mutual contact areas 62, and hence the forming cavity 15, and also of the contact lens, and to further improve product quality, when mating the female and male dies 12, 14, it is effective to bring only one them to a high temperature softened state so that there is a certain difference in hardness between the two dies 12, 14, thereby avoiding irregular deformation of the two dies, and making it possible to advantageously ensure the shape of the forming cavity 15 by means of the one hard die. As a specific example, where the female and male dies 12, 14 are fabricated of polypropylene, mating will preferably be carried out the female die 12 at room temperature (20°C), while the male die 14 is in a high temperature state of 30°C or above, preferably 35°C above.

As described above, by carrying out mating using the male die 14 in a high temperature state after having been molded of predetermined resin material, there is no need to subsequently heat the male die 14, obviating the need for a special heating apparatus, as well as reducing heating time as compared to where subsequent heating is employed, so that the contact lens molding cycle can be improved.

Additionally, in the forming die 10 having the construction described above, the female and male dies 12, 14 are secured together fitting by the tubular fitted portion 60, so even if the die closing force is released or lowered after mating, the female and male dies 12, 14 can be held stably in the mated state, and thus even when the mated dies are transported to a polymerization, apparatus or the like, it is nevertheless possible to effectively prevent molding defects resulting from a change in the mated state of the female and male dies 12, 14.

While the invention has been described hereinabove in terms of a certain preferred embodiment, this is merely exemplary and is not intended to be construed as limiting the invention to the specific disclosure in the embodiment. Various alterations, modifications, and improvements apparent to those skilled in the art may result in other embodiments which will nevertheless fall within the scope of the invention insofar as they do not depart from the spirit of the invention.

For example, the shape of the forming faces 25, 44 of the female and male dies may be spherical or aspherical (e.g. elliptical), in consideration of the shape of the target ophthalmic lens.

In the preceding embodiment, an annular flat surface 26 is formed on the female die 12, while a flat contact face 46 and a sloped opposing face 48 of bowed cross section is formed on the male die 14. However, the sloped opposing face 48 could instead be configured as a tapered face of linear cross section as shown in FIG. 5, or of notched shape as shown in FIG. 6. Alternatively, as depicted in FIG. 7, it would be possible, in the reverse of the embodiment described hereinabove, to form the annular flat surface 26 on the male die 14, while forming the flat contact face 46 and sloped opposing face 48 on the female die 12.

Further, whereas in the embodiment hereinabove, the tubular inner peripheral surface 30 of the female die 12 and the tubular outer peripheral surface 50 of the male die 14 in the tubular fitted portion 60 fit together in a generally entirely tight state at their diametrically opposed faces that extend all the way around the circumferential direction, so as to ensure a high degree of sealing of the auxiliary cavity 64 formed between the female and male dies 12, 14, according to the spirit of the present invention, the auxiliary cavity 64 need only have sealed construction to the extent of preventing the pressure of the polymerizable monomer 66 from being completely released to atmospheric pressure during polymerization of the polymerizable monomer 66. Thus, the polymerization shrinkage of the polymerizable monomer 66 may be exerted on the female and male dies 12, 14 in the mating direction. This is referred to as substantially sealed construction of the auxiliary cavity 64. Accordingly, it is possible to adjust the level of intimate contact in the tubular fitted portion 60 of the female and male dies 12, 14, in consideration of factors such as viscosity of the polymerizable monomer 66 employed, its change in characteristics when polymerized, and localized differences in the extent to which polymerization proceeds when the polymerizable monomer 66 is polymerized.

Specifically, for example, by forming a groove 72 extending in the axial direction (mating direction of the female and male dies 12, 14) on the tubular inner peripheral surface 30 of the female die 12 as depicted in FIGS. 8 -9, or forming a groove 74 extending in the axial direction on the tubular outer peripheral surface 50 of the male die 14 as depicted in FIGS. 10 -11, it is possible to form an outlet gap 76 by way of a gap that extends through the tubular fitted portion 60 when the female and male dies 12, 14 are mated, which gap is small enough that the negative pressure accompanying polymerization shrinkage during polymerization of the polymerizable monomer filling the auxiliary cavity 64 does not escape. That is, by forming an outlet gap 76, in the stage prior to polymerization of the polymerizable monomer it is possible for excess polymerizable monomer 66 filling the forming cavity 15 and the auxiliary cavity 64 to be expelled to the outside through the outlet gap 76. during mating of the female and male dies 12, 14. Thus, even where the female and male dies 12, 14 are mated by being press-fit under high pressure for example, elevated fill pressure of the polymerizable monomer 66 in the forming cavity 64 can be reduced or avoided and lift (slight parting) of the female and male dies 12, 14 after mating due to residual fill pressure can be prevented, thereby making possible a higher level of accuracy in molding, as well as avoiding a condition of initial high pressure in the auxiliary cavity 64 prior to polymerization, so as to more effectively exhibit the target fitting assist force on the female and male dies 12, 14 that accompanies polymerization shrinkage of the polymerizable monomer 66.

By appropriately setting the characteristics of the polyinerizable monomer 66 used, the polymerization procedure, and the like, the outlet gap 76 for expelling excess polymerizable monomer 66 from the auxiliary cavity 64 during mating of the female and male dies 12, 14 can be established in appropriate size, number and location, within a range such that negative pressure created in the auxiliary cavity 64 on the basis of polymerization shrinkage is not prevented from being effectively exerted on the female and male dies 12, 14 as force in the mating direction. Specifically, it is possible to form a plurality of such outlet gaps 76 by means of forming a plurality of grooves 72 spaced apart in the circumferential direction on the tubular inner peripheral surface 30 of the female die 12 as depicted in FIGS. 12 - 13, or forming a plurality of grooves 74 spaced apart in the circumferential direction on the tubular outer peripheral surface 50 of the male die 14 as depicted in FIGS. 14 -15.

In FIGS. 5-15 hereinabove, in order to aid understanding, parts and regions of similar construction to those of the embodiment are each assigned the same symbol as in the embodiment in the drawings.

## Claims

1. A contact lens forming die comprising a female die having a concave forming face and a male die having a convex forming face, which are mated with each other to create a forming cavity between the opposed concave forming face and convex forming face, the forming cavity adapted to be filled with polymerizable monomer which is polymerized to form a contact lens, the contact lens forming die **characterized in that**,
by means of mating the female die and the male die with each other, annular flat mutual contact areas extending over a width of 0.01 mm or greater in a direction orthogonal to the die mating direction are formed by abutting the female and male dies at an outer peripheral side of the concave forming face and the convex forming face,
at an outer peripheral side of the mutual contact areas an auxiliary cavity of substantially closed structure to be filled with the polymerizable monomer during molding is formed by the female and male dies positioned spaced apart in opposition to each other in a die mating direction; and
a tubular fitted part is formed by fitting together of the female and male dies at an outer peripheral side of the auxiliary cavity by means of tubular surfaces extending in the die mating direction.

2. A contact lens forming die according to claim 1, wherein a capacity of the auxiliary cavity is 1 -250% of a capacity of the forming cavity.

3. A contact lens forming die according to claim 1 or 2, wherein by means of mating the female die and the male die with each other, the male and female dies are positioned spaced apart from each other by an outer peripheral side of the tubular fitted portion, forming an annular monomer reservoir that contains an excess polymerizable monomer during molding.

4. A contact lens forming die according to any one of claims 1-3, wherein in the female die, a face forming the auxiliary cavity is a smooth surface devoid of bumps in an entirety thereof.

5. A contact lens forming die according to any of claims 1-4, wherein the female die is formed with an annular flat surface extending in a direction generally orthogonal to the die mating direction towards an outer peripheral side from an peripheral edge portion of the concave forming face, the annular flat surface of the female die being brought into abutment at an inner peripheral portion thereof with the male die so as to form the mutual contact areas, and being positioned at an outer peripheral portion thereof in opposition to the male die spaced apart therefrom in the die mating direction so as to form the auxiliary cavity.

6. A contact lens forming die according to claim 5, wherein the male die is formed with an annular flat surface extending in a direction generally orthogonal to the die mating direction towards an outer peripheral side from an peripheral edge portion of the convex forming face, the annular flat surface of the male diem being brought into abutment with the annular flat surface of the female die so as to form the mutual contact areas, and a sloping face that extends towards the outer peripheral side from an peripheral edge portion of the annular flat surface of the male die and that moving towards the outer peripheral side becomes gradually further apart in the die mating direction from the annular flat surface of the female die, the sloping face being positioned in opposition to the annular flat surface of the female die so as to form the auxiliary cavity, and having a tapered face that slopes at a predetermined angle in the die mating direction and extends linearly towards the outer peripheral side, or a bowed convex face that projects out to the auxiliary cavity side and extends towards the outer peripheral side.

7. A contact lens forming die according to any one of claims 1-6, wherein the tubular surface making up the tubular fitting portion in the female die is formed projecting from a peripheral edge side of an auxiliary cavity forming face in the die mating direction of the female die with the male die.

8. A contact lens forming die according to any one of claims 1-7, wherein a gap for expelling excess polymerizable monomer in the auxiliary cavity to an outside during mating of the male and female dies is formed in the tubular fitting portion.

9. A method for manufacturing a contact lens **characterized in that** when manufacturing a contact lens using the contact lens forming die pertaining to any one of claims 1-8, **characterized in that** with the forming cavity and the auxiliary cavity formed between the mating faces of the female die and the male die being filled with the polymerizable monomer, the polymerizable monomer filling the forming cavity and the auxiliary cavity is subjected to a polymerization process.

10. A method for manufacturing a contact lens according to claim 9, wherein the mating direction of the male and female dies is generally vertical, with the male die being mated relative to the female die from above in the vertical direction.

11. A method for manufacturing a contact lens according to claim 9 or 10, wherein at least one die selected from the male die and the female die is a forming die of synthetic resin, and with the male and/or female die of synthetic resin in a softened state at high temperature, the polymerizable monomer is supplied between the opposed face of the male and female dies, while mating the male and female dies so that the forming cavity and the auxiliary cavity are filled with the polymerizable monomer.

12. A method for manufacturing a contact lens according to claim 11 wherein at least one die selected from the male die and the female die is a forming die of synthetic resin, with the male and/or female die of synthetic resin being mated used in a high temperature state prior to completely cooling after molding thereof.
